(19) Europäisches Patentamt / European Patent Office / Office européen des brevets

(11) **EP 4 130 176 A1**

(12) **EUROPEAN PATENT APPLICATION**
published in accordance with Art. 153(4) EPC

(43) Date of publication:
**08.02.2023 Bulletin 2023/06**

(21) Application number: **21776425.7**

(22) Date of filing: **17.03.2021**

(51) International Patent Classification (IPC):
**C09D 201/00** (1990.01)      **C09K 3/18** (1968.09)
**C09D 7/63** (2018.01)      **C09J 7/38** (2018.01)

(52) Cooperative Patent Classification (CPC):
**C09D 7/63; C09D 201/00; C09J 7/38; C09K 3/18**

(86) International application number:
**PCT/JP2021/010950**

(87) International publication number:
**WO 2021/193313 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.03.2020   JP 2020058774
23.12.2020   JP 2020213811**

(71) Applicant: **NITTO DENKO CORPORATION
Ibaraki-shi
Osaka 567-8680 (JP)**

(72) Inventors:
• **ONA, Haruka**
  **Ibaraki-shi, Osaka 567-8680 (JP)**
• **YANO, Hikaru**
  **Ibaraki-shi, Osaka 567-8680 (JP)**
• **EGUCHI, Kenichi**
  **Ibaraki-shi, Osaka 567-8680 (JP)**
• **FUJITA, Hiroyuki**
  **Ibaraki-shi, Osaka 567-8680 (JP)**

(74) Representative: **Gill Jennings & Every LLP
The Broadgate Tower
20 Primrose Street
London EC2A 2ES (GB)**

(54) **COATING, COATING FILM LAYER, AND LAMINATE**

(57)    The present invention relates to a coating material containing a resin component and at least one oil component, in which the oil component can exude out from a cured or dried coating film layer to which the coating material has been applied when a temperature drops to a predetermined value or less, the coating material further contains an oil component P, an absolute value of a difference between a value of a solubility parameter of the oil component P and a value of a solubility parameter of the resin component is less than 0.4 $(J/cm^3)^{1/2}$, and the oil component P has a solubility parameter contribution value A of 3 or less and satisfies a specific condition.

*FIG. 1*

**Description**

TECHNICAL FIELD

The present invention relates to a coating material, and more particularly to a coating material used for preventing adhesion of snow or ice on a surface of an object such as a solar panel, an aircraft, a railway, an automobile, a wind power generator, a house, a traffic light, and a signboard. The present invention also relates to a laminate formed using the coating material.

BACKGROUND ART

Adhesion of ice (ice adhesion) on an object surface and adhesion of snow (snow adhesion) due to snowfall cause many damages and obstacles in various fields. For example, ice adhesion on airfoils, snow adhesion and freezing on a lower part of an engine vehicle, snow adhesion on headlights of an automobile, ice adhesion on blades of a solar panel or a wind power generator, snow adhesion and freezing on a lamp of a traffic light, and the like may be obstacles to the operation, driving, and safety thereof.

In addition, snow adhesion and freezing on a house roof, a signboard, or the like may cause damage to a person due to damage to these structures or falling snow.

In related art, in each industrial field, various coating materials containing oil have been developed as a countermeasure for preventing such snow adhesion and ice adhesion on an object surface.

For example, Patent Literature 1 discloses a coating material for water-repellent coating, which contains one kind or a mixture of a plurality of kinds of fluorine resin powder or inorganic fine powder whose surface has been subjected to a hydrophobic treatment, a silicone resin binder, and one kind or a mixture of a plurality of kinds of silicone oil and fluorosilicone oil.

CITATION LIST

PATENT LITERATURE

Patent Literature 1: JP-A-2000-026844

SUMMARY OF INVENTION

TECHNICAL PROBLEM

The present inventors have studied a material having an ice and/or snow adhesion prevention function, which is designed so that oil bleeds out from a coating film layer when an exposure temperature of the coating film layer drops to a predetermined temperature (hereinafter, referred to as a "bleeding temperature") or less. However, when the bleeding temperature of this material falls below the exposure temperature of the coating film layer, the oil cannot bleed out from the coating film layer, and the ice and/or snow adhesion prevention function of the coating film layer is greatly reduced.

According to the study by the present inventors, it has been found that the bleeding temperature decreases as the bleed oil is consumed.

The present invention has been made in view of the above circumstances of the related art, and an object of the present invention is to provide a coating material capable of preventing a decrease in bleeding temperature and of obtaining a coating film layer having an excellent ice and/or snow adhesion prevention function.

SOLUTION TO PROBLEM

As a result of intensive studies to solve the above problems, the present inventors have focused on a value of a solubility parameter of an oil component and at least one of a vapor pressure and a mass reduction rate of the oil component, and have completed the present invention.

That is, the present invention relates to the following <1> to <6>.

<1> A coating material containing a resin component and at least one oil component, in which

the oil component can exude out from a cured or dried coating film layer to which the coating material has been applied when a temperature drops to a predetermined value or less,
the coating material further contains an oil component P,

an absolute value of a difference between a value of a solubility parameter of the oil component P and a value of a solubility parameter of the resin component is less than 0.4 $(J/cm^3)^{1/2}$, and

the oil component P has a solubility parameter contribution value A determined by the following formula (10) of 3 or less, and satisfies at least one of the following conditions (a) and (b):

(a) a vapor pressure at 25°C is 0.01 Pa or more, and
(b) a mass reduction rate when left to stand in an environment of 25°C and -0.1 MPa for 5 hours is 2.2 mass% or more,

$$\text{Solubility parameter contribution value } A = f \times m \times 100...(10)$$

(in the formula (10), f can be calculated by the following formula (20), and m means a mass fraction of an incompatible molecular unit in the oil component P),

$$f = \{(f_{d1} - f_{d2})^2 + (f_{p1} - f_{p2})^2 + (f_{h1} - f_{h2})^2\}^{0.5}...(20)$$

(in the formula (20), fai is a value determined by the following formula (3a1), $f_{d2}$ is a value determined by the following formula (3a2), $f_{p1}$ is a value determined by the following formula (3a3), $f_{p2}$ is a value determined by the following formula (3a4), $f_{h1}$ is a value determined by the following formula (3a5), and $f_{h2}$ is a value determined by the following formula (3a6),

$$f_{d1} = \delta_{d1}/(\delta_{d1} + \delta_{p1} + \delta_{h1})...(3a1)$$

$$f_{d2} = \delta_{d2}/(\delta_{d2} + \delta_{p2} + \delta_{h2})...(3a2)$$

$$f_{p1} = \delta_{p1}/(\delta_{d1} + \delta_{p1} + \delta_{h1})...(3a3)$$

$$f_{p2} = \delta_{p2}/(\delta_{d2} + \delta_{p2} + \delta_{h2})...(3a4)$$

$$f_{h1} = \delta_{h1}/(\delta_{d1} + \delta_{p1} + \delta_{h1})...(3a5)$$

$$f_{h2} = \delta_{h2}/(\delta_{d2} + \delta_{p2} + \delta_{h2})...(3a6)$$

(in the formulae (3a1) to (3a6),

$\delta_{d1}$ is energy $(J/cm^3)^{1/2}$ due to a dispersing force of a compatible molecular unit,
$\delta_{d2}$ is energy $(J/cm^3)^{1/2}$ due to a dispersing force of an incompatible molecular unit,
$\delta_{p1}$ is energy $(J/cm^3)^{1/2}$ due to a dipole interaction of the compatible molecular unit,
$\delta_{p2}$ is energy $(J/cm^3)^{1/2}$ due to a dipole interaction of the incompatible molecular unit,
$\delta_{h1}$ is energy $(J/cm^3)^{1/2}$ due to a hydrogen bond of the compatible molecular unit,
$\delta_{h2}$ is energy $(J/cm^3)^{1/2}$ due to a hydrogen bond of the incompatible molecular unit,
the compatible molecular unit is a molecular unit that is present in the largest amount in the oil component P,
the incompatible molecular unit is a molecular unit in the oil component P for which a difference in solubility parameter from the compatible molecular unit is 0.01 $(J/cm^3)^{1/2}$ or more, and
when there is a plurality of incompatible molecular units, $f_{d2}$, $f_{p2}$, and $f_{h2}$ of all the incompatible molecular units are separately determined, and for each of $f_{d2}$, $f_{p2}$, and $f_{h2}$, a weighted average is obtained by a mass ratio (mass of specific incompatible molecular unit/total mass of all incompatible molecular units) to determine $f_{d2}$, $f_{p2}$, and $f_{h2}$).

<2> The coating material according to <1>, in which a vapor pressure of the oil component P at 25°C is 1 Pa or more.

<3> The coating material according to <1> or <2>, in which a mass reduction rate of the oil component P when left to stand in an environment of 25°C and -0.1 MPa for 5 hours is 25 mass% or more.

<4> The coating material according to any one of <1> to <3>, in which the following formula (1) is satisfied:

$$\text{Gel fraction (\%) of post-decompression coating film layer - gel fraction (\%) of}$$
$$\text{initial coating film layer} \geq 0.5 \text{ (\%)...(1)}$$

(in the formula (1), the gel fraction (%) of the initial coating film layer is a value obtained by the following formula (2), and the gel fraction (%) of the post-decompression coating film layer is a value determined by the following formula (3)),

$$\text{Gel fraction (\%) of initial coating film layer} = \{\text{mass (g) of initial coating film layer}$$
$$\text{after heating and drying/mass (g) of initial coating film layer}\} \times 100...(2)$$

(in the formula (2), the initial coating film layer is a coating film layer obtained by curing the coating material, and the initial coating film layer after heating and drying is a coating film layer obtained by immersing the coating film layer in toluene for 24 hours and heating and drying the coating film layer in an environment of 150°C for 2 hours),

$$\text{Gel fraction (\%) of post-decompression coating film layer} = \{\text{mass (g) of post-}$$
$$\text{decompression coating film layer after heating and drying/mass (g) of post-decompression}$$
$$\text{coating film layer}\} \times 100...(3)$$

(in the formula (3), the post-decompression coating film layer is a coating film layer obtained by drying the coating film layer obtained by curing the coating material under a reduced pressure of -0.1 MPa in an environment of 40°C for 16 hours, and the post-decompression coating film layer after heating and drying is a coating film layer obtained by immersing the post-decompression coating film layer in toluene for 24 hours, and heating and drying the post-decompression coating film layer in an environment of 150°C for 2 hours).

<5> A coating film layer obtained by curing the coating material according to any one of <1> to <4>.

<6> A laminate including the coating film layer according to <5> and a pressure-sensitive adhesive layer.

ADVANTAGEOUS EFFECTS OF INVENTION

A coating film layer obtained from a coating material of the present invention can prevent a decrease in bleeding temperature, and has an excellent ice and/or snow adhesion prevention function.

BRIEF DESCRIPTION OF DRAWINGS

[FIG. 1] FIG. 1 is a cross-sectional view showing a coating film layer formed from a coating material of the present invention together with an object to be coated.

[FIG. 2] FIG. 2 is a cross-sectional view showing an example of a layer structure including the coating film layer formed from the coating material of the present invention together with the object to be coated.

DESCRIPTION OF EMBODIMENTS

Hereinafter, embodiments of the present invention will be described in more detail, but the present invention is not limited to the following embodiments at all.

[Coating Material]

A coating material of the present invention contains a resin component and at least one oil component.

(Resin Component)

The resin component may be any of a moisture curable resin that is cured by moisture, an ultraviolet curable resin that is cured by ultraviolet irradiation, and a thermosetting resin that is cured by heating. In addition, the resin component may be a resin that is cured by addition of a curing agent that reacts with a resin component or a thermoplastic resin.

Examples of the resin component include, but are not particularly limited to, silicone resins, polyurethane resins, polyurethane acrylic resins, vinyl chloride resins, polyester resins, elastomers, fluorine resins, polyamide resins, polyolefin resins (polyethylene, polypropylene, etc.), acrylic resins, ethylene-propylene-diene rubbers (EPDM), styrene-based thermoplastic elastomers (SEBS), styrene-butadiene rubbers (SBR), etc.

Any appropriate silicone resin may be adopted as the silicone resin as long as the effects of the present invention are not impaired. The silicone resin may be of only one kind or of two or more kinds. Such a silicone resin may be a condensation-type silicone resin or an addition-type silicone resin. In addition, such a silicone resin may be a one-component silicone resin (e.g., a one-component room temperature vulcanizing (RTV) resin) which is dried alone, or may be a two-component silicone resin (e.g., a two-component room temperature vulcanizing (RTV) resin).

Examples of the silicone resins include one-component RTV rubbers (e.g., KE-3423, KE-347, KE-3475, KE-3495, KE-4895, KE-4896, KE-1830, KE-1884, KE-3479, KE-348, KE-4897, KE-4898, KE-1820, KE-1825, KE-1831, KE-1833, KE-1885, KE-1056, KE-1151, KE-1842, KE-1886, KE-3424G, KE-3494, KE-3490, KE-40RTV, KE-4890, KE-3497, KE-3498, KE-3493, KE-3466, KE-3467, KE-1862, KE-1867, KE-3491, KE-3492, KE-3417, KE-3418, KE-3427, KE-3428, KE-41, KE-42, KE-44, KE-45, KE-441, KE-445, KE-45S, etc.) manufactured by Shin-Etsu Chemical Co., Ltd., and two-component RTV rubbers (e.g., KE-1800T-A/B, KE-66, KE-1031-A/B, KE-200, KE-118, KE-103, KE-108, KE-119, KE-109E-A/B, KE-1051J-A / B, KE-1012-A/B, KE-106, KE-1282-A/B, KE-1283-A/B, KE-1800-A/B/C, KE-1801-A/B/C, KE-1802-A/B/C, KE-1281-A/B, KE-1204-A/B, KE-1204-AL/BL, KE-1280-A/B, KE-513-A/B, KE-521-A/B, KE-1285-A/B, KE-1861-A/B, KE-12, KE-14, KE-17, KE-113, KE-24, KE- 26, KE-1414, KE-1415, KE-1416, KE-1417, KE-1300T, KE-1310ST, KE-1314-2, KE-1316, KE-1600, KE-117603-A/B, KE-1606, KE-1222-A/B, KE-1241, etc.) manufactured by Shin-Etsu Chemical Co., Ltd., silicone sealants (e.g., KE-42AS, KE-420, KE-450, etc.) manufactured by Shin-Etsu Chemical Co., Ltd., rubber compounds (e.g., KE-655-U, KE-675-U, KE-931-U, KE-941-U, KE-951-U, KE-961-U, KE-971-U, KE-981-U, KE- 961T-U, KE-971T-U, KE-871C-U, KE-9410-U, KE-9510-U, KE-9610-U, KE-9710-U, KE-742-U, KE-752-U, KE-762-U, KE-772-U, KE-782-U, KE-850-U, KE-870-U, KE-880-U, KE-890-U, KE-9590-U, KE-5590-U, KE-552-U, KE-582-U, KE-552B-U, KE-555-U, KE-575-U, KE-541-U, KE-551-U, KE- 561-U, KE-571-U, KE-581-U, KE-520-U, KE-530B-2-U, KE-540B-2-U, KE-1551-U, KE-1571-U, KE-152-U, KE-174-U, KE-3601SB-U, KE-3711-U, KE-3801M-U, KE-5612G-U, KE-5620BL-U, KE-5620W-U, KE- 5634-U, KE-7511-U, KE-7611-U, KE-765-U, KE-785-U, KE-7008-U, KE-7005-U, KE-503-U, KE-5042- U, KE-505-U, KE-6801-U, KE-136Y-U, etc.) manufactured by Shin-Etsu Chemical Co., Ltd.; a liquid silicone rubber injection molding system (LIMS) (e.g., KEG-2000-40A/B, KEG-2000-50A/B, KEG-2000-60A/B,  KEG-2000-70A/B,  KEG-2001-40A/B,  KEG-2001-50A/B,  KE-1950-10A/B,  KE-1950-20A/B,  KE-1950-30A/B, KE-1950-35A/B, KE-1950-40A/B, KE-1950-50A/B, KE-1950-60A/B, KE-1950-70A/B, KE-193185A/B, KE-1987A/B,  KE-1988A/B,  KE-2019-40A/B,  KE-2019-50A/B,  KE-2019-60A/B,  KE-2017-30A/B,  KE-2017-40A/B,  KE-2017-50A/B,  KE-2090-40A/B,  KE-2090-50A/B,  KE-2090-60A/B,  KE-2090-70A/B,  KE-2096-40A/B,  KE-2096-50A/B,  KE-2096-6OA/B, etc.) manufactured by Shin-Etsu Chemical Co., Ltd.; dimethiconol (e.g., X-21-5847, X-21-5849) manufactured by Shin-Etsu Chemical Co., Ltd.; LR7665 series manufactured by Wacker Asahikasei Silicone Co., Ltd.; LR3033 series manufactured by Wacker Asahikasei Silicone Co., Ltd.; TSE3032 series manufactured by Momentive Performance Co., Ltd.; Silguard 184 manufactured by Dow Corning Toray Co., Ltd.; etc.

(Oil Component)

The at least one oil component used in the present invention can exude out from a cured or dried coating film layer to which the coating material has been applied when a temperature drops to a predetermined value or less.

The term "a predetermined value or less" means, for example, a freezing point (0°C) or less.

Examples of the oil component include silicone oil, fluorine oil, hydrocarbon-based oil, polyether-based oil, ester-based oil, phosphorus compound-based oil, mineral-based oil, alcohol, etc.

Examples of the silicone oil include liquid paraffin such as silicone oils (e.g., KF96L series, KF96 series, KF69 series, KF99 series, KF50 series, KF54 series, KF410 series, KF412 series, KF414 series, FL series, KF-56A, KF-6000, KF-6001, KF-6002, KF-6003) manufactured by Shin-Etsu Chemical Co., Ltd.; silicone oils (e.g., Element 14* PDMS series, TSF404 series, TSF410 series, TSF4300 series, TSF431 series, TSF433 series, TSF437 series, TSF4420 series, TSF4421 series) manufactured by Momentive Performance Co., Ltd., silicone oils (e.g., BY16-846 series, SF8416 series, SF8427 series, SF-8428 series, SH200 series, SH203 series, SH230 series, SF8419 series, FS1265 series, SH510 series, SH550 series, SH710 series, FZ-2110 series, FZ-2203 series, BY16-201) manufactured by Dow Corning Toray Co., Ltd., and silicone oils (e.g., WACKER (registered trademark) SILICONE FLUID AK series, WACKER (registered trademark) SILICONE FLUID AP series, WACKER (registered trademark) SILICONE FLUID AR series, WACKER (registered trademark) SILICONE FLUID AS series, WACKER (registered trademark) TN series, WACKER (registered trademark) registered trademark) L series, WACKER (registered trademark) AF series) manufactured by Wacker Asahikasei Silicone Co., Ltd., etc.

(Oil Component P)

The coating material of the present invention further contains an oil component P.
An absolute value of a difference between a value of a solubility parameter of the oil component P and a value of a solubility parameter of the resin component is less than 0.4 $(J/cm^3)^{1/2}$, preferably less than 0.3 $(J/cm^3)^{1/2}$, and more preferably less than 0.2 $(J/cm^3)^{1/2}$.
The value of the solubility parameter can be calculated by a method described later.
The oil component P has a solubility parameter contribution value A determined by the following formula (10) of 3 or less, preferably 2 or less, and more preferably 1 or less.

$$\text{Solubility parameter contribution value A} = f \times m \times 100...(10)$$

(In the formula (10), f can be calculated by the following formula (20), and m means a mass fraction of an incompatible molecular unit in the oil component P.)

$$f = \{(f_{d1} - f_{d2})^2 + (f_{p1} - f_{p2})^2 + (f_{h1} - f_{h2})^2\}^{0.5}...(20)$$

(In the formula (20), fai is a value determined by the following formula (3a1), $f_{d2}$ is a value determined by the following formula (3a2), $f_{p1}$ is a value determined by the following formula (3a3), $f_{p2}$ is a value determined by the following formula (3a4), $f_{h1}$ is a value determined by the following formula (3a5), and $f_{h2}$ is a value determined by the following formula (3a6).)

$$f_{d1} = \delta_{d1}/(\delta_{d1} + \delta_{p1} + \delta_{h1})...(3a1)$$

$$f_{d2} = \delta_{d2}/(\delta_{d2} + \delta_{p2} + \delta_{h2})...(3a2)$$

$$f_{p1} = \delta_{p1}/(\delta_{d1} + \delta_{p1} + \delta_{h1})...(3a3)$$

$$f_{p2} = \delta_{p2}/(\delta_{d2} + \delta_{p2} + \delta_{h2})...(3a4)$$

$$f_{h1} = \delta_{h1}/(\delta_{d1} + \delta_{p1} + \delta_{h1})...(3a5)$$

$$f_{h2} = \delta_{h2}/(\delta_{d2} + \delta_{p2} + \delta_{h2})...(3a6)$$

(In the formulae (3a1) to (3a6),

$\delta_{d1}$ is energy $(J/cm^3)^{1/2}$ due to a dispersing force of a compatible molecular unit,
$\delta_{d2}$ is energy $(J/cm^3)^{1/2}$ due to a dispersing force of an incompatible molecular unit,
$\delta_{p1}$ is energy $(J/cm^3)^{1/2}$ due to a dipole interaction of the compatible molecular unit,

$\delta_{p2}$ is energy $(J/cm^3)^{\frac{1}{2}}$ due to a dipole interaction of the incompatible molecular unit,

$\delta_{h1}$ is energy $(J/cm^3)^{\frac{1}{2}}$ due to a hydrogen bond of the compatible molecular unit,

$\delta_{h2}$ is energy $(J/cm^3)^{\frac{1}{2}}$ due to a hydrogen bond of the incompatible molecular unit,

the compatible molecular unit is a molecular unit that is present in the largest amount in the oil component P,

the incompatible molecular unit is a molecular unit in the oil component P for which a difference in solubility parameter from the compatible molecular unit is 0.01 $(J/cm^3)^{\frac{1}{2}}$ or more, and

when there is a plurality of incompatible molecular units, $f_{d2}$, $f_{p2}$, and $f_{h2}$ of all the incompatible molecular units are separately determined, and for each of $f_{d2}$, $f_{p2}$, and $f_{h2}$, a weighted average is obtained by a mass ratio (mass of specific incompatible molecular unit/total mass of all incompatible molecular units) to determine $f_{d2}$, $f_{p2}$, and $f_{h2}$).

For example, when there are two kinds of incompatible molecular units, A and B, and a mass ratio thereof is A:B = 1:2, first, $f_{d2}$, $f_{p2}$, and $f_{h2}$, of A and $f_{d2}$, $f_{p2}$, and $f_{h2}$ of B are determined, separately. Then, final $f_{d2}$, $f_{p2}$, and $f_{h2}$ are determined by the following formulae.

$$f_{d2} = ((f_{d2} \text{ of A}) \times 1 + (f_{d2} \text{ of B}) \times 2) / (1 + 2)$$

$$f_{p2} = (f_{p2} \text{ of A}) \times 1 + (f_{p2} \text{ of B}) \times 2) / (1 + 2)$$

$$f_{d2} = ((f_{h2} \text{ of A}) \times 1 + (f_{h2} \text{ of B}) \times 2) / (1 + 2)$$

The oil component P satisfies at least one of the following conditions (a) and (b).

(a) A vapor pressure at 25°C is 0.01 Pa or more.
(b) A mass reduction rate when left to stand in an environment of 25°C and -0.1 MPa for 5 hours is 2.2 mass% or more.

In the case where the oil component P contained in the coating material of the present invention satisfies at least one of the conditions (a) and (b), the oil component P gradually volatilizes and a decrease in a concentration of a second oil component described later in the coating film layer can be prevented when the coating material of the present invention is cured or dried to be used as a coating film layer. As a result, it is presumed that bleeding of the second oil component described later from the coating film layer continues, and a decrease in the bleeding temperature can be prevented.

In one embodiment of the coating material of the present invention when the oil component P satisfies the condition (a), the vapor pressure of the oil component P at 25°C is preferably 0.02 Pa or more, more preferably 0.05 Pa or more, and still more preferably 0.1 Pa or more, from the viewpoint of preventing a decrease in bleeding temperature. The vapor pressure of the oil component P at 25°C is preferably 25 Pa or less, more preferably 20 Pa or less, and still more preferably 15 Pa or less, from the viewpoint of preventing a decrease in bleeding temperature.

In another embodiment of the coating material of the present invention when the oil component P satisfies the condition (a), the vapor pressure of the oil component P at 25°C is preferably 1 Pa or more, more preferably 2 Pa or more, still more preferably 5 Pa or more, particularly preferably 10 Pa or more, from the viewpoint of preventing a decrease in the bleed oil amount during curing at a low temperature (e.g., 0°C or less). The vapor pressure of the oil component P at 25°C is preferably 15000 Pa or less, more preferably 10000 Pa or less, and still more preferably 5000 Pa or less, from the viewpoint of preventing a decrease in the bleed oil amount during curing at a low temperature.

When the vapor pressure of the oil component P at 25°C is 1 Pa or more, phase separation of the resin component and at least one oil component can be prevented, and the oil component P volatilizes after curing. Therefore, it is presumed that even when the coating material is cured at a low temperature, a decrease in the bleed oil amount can be prevented.

In one embodiment of the coating material of the present invention when the oil component P satisfies the condition (b), the mass reduction rate of the oil component P when left to stand in an environment of 25°C and -0.1 MPa for 5 hours is preferably 7.5 mass% or more, more preferably 10 mass% or more, still more preferably 15 mass% or more, yet still more preferably 25 mass% or more, and particularly preferably 30 mass% or more.

Examples of the oil component P include silicone oils (e.g., KF96L series, KF96 series, and KF995 series) manufactured by Shin-Etsu Chemical Co., Ltd., liquid paraffin (e.g., Moresco White P series) manufactured by MORESCO Corporation, etc. Cyclic siloxanes (e.g., octamethylcyclotetrasiloxane and dodecamethylcyclohexasiloxane) can also be used.

The weight average molecular weight (Mw) of the oil component P is preferably 50 or more, more preferably 100 or more, still more preferably 150 or more. The weight average molecular weight (Mw) of the oil component P is preferably 6000 or less, more preferably 4000 or less, and still more preferably 2000 or less.

(Characteristics of Resin Component and Oil Component)

Hereinafter, characteristics of the resin component and the oil component when two kinds of oil components (a first oil component and a second oil component) are used will be described.

As the first oil component, the second oil component, and the resin component, for example, a combination satisfying the following properties 1) and 2) is preferably selected.

1) The resin component and/or the first oil component and the second oil component are not phase-separated and are compatible with each other at a temperature at which bleeding of the second oil component is not required, for example, at a normal temperature of about 20°C to 80°C, which is significantly higher than a predetermined value such as a freezing point. On the other hand, the resin component and/or the first oil component and the second oil component are phase-separated under an environment of a temperature at which bleeding of the second oil component is required, for example, a temperature of a predetermined value or less such as a freezing point.

2) The first oil component has affinity for the resin component at both a temperature at which bleeding of the second oil component is not required and a temperature at which bleeding of the second oil component is required. On the other hand, in the presence of the first oil component, the behavior of the second oil component is changed depending on whether the temperature is a temperature at which bleeding of the second oil component is not required or a temperature at which bleeding of the second oil component is required. In other words, the second oil component functions as a low-temperature phase-separable oil component that is phase-separated from the resin component and/or the first oil component.

In addition, it is empirically known that the value (SP value) of the solubility parameter serves as an indicator for determining the ease of mixing of a solvent and a solute. The relationship between the first oil component, the second oil component, and the resin component described above can also be described based on the relationship between the values of the solubility parameters thereof. In the present specification, a Hansen solubility parameter is used as the solubility parameter. This value can be determined by performing Fourier transform nuclear magnetic resonance spectroscopy analysis on the first oil component, the second oil component, and the resin component, examining the types of molecular units constituting the molecular structure of each component and molar ratios thereof, and calculating a weighted average of Hansen solubility parameters of each molecular unit type in terms of the molar ratio.

The Hansen solubility parameter of each molecular unit type can be determined by a molecular group contribution method using software "HSPiP, Hansen Solubility Parameters in Practice ver4" available from a link (https://hansen-soLubiLity.com/). Specifically, HSP values ($\delta_d$, $\delta_p$, $\delta_h$) of the respective units can be calculated by inputting the respective constituent units in a target substance by a SMILES notation.

In order to satisfy the relationships 1) and 2) above, at least a difference between the value of the solubility parameter of the resin component and the value of the solubility parameter of the first oil component is preferably set to be smaller than a difference between the value of the solubility parameter of the resin component and the value of the solubility parameter of the second oil component. The difference in solubility parameter between the first oil component and the resin component is preferably set to 0.6 $(J/cm^3)^{1/2}$ or less.

For example, when the relationships 1) and 2) above are satisfied, the second oil component is compatible with the resin component and/or the first oil component and does not bleed out at a temperature at which bleeding of the second oil component is not required. On the other hand, when the temperature is changed to the temperature at which bleeding of the second oil component is required, the second oil component is phase-separated from the resin component and/or the first oil component to exude out from the resin component, and can function as a bleedable low-temperature phase-separable oil component.

Here, the embodiment in which the difference between the value of the solubility parameter of the resin component and the values of the solubility parameters of the first oil component and the second oil component is set to a predetermined relationship, thereby exuding (bleeding) a part of the oil component, particularly the second oil component, in the coating film layer to prevent ice and/or snow adhesion has been described as an example, but the scope of the present invention is not limited to the embodiment.

For example, the compatibility can be controlled in the same manner by utilizing a difference in molecular weight or a difference in molecular structure between the first oil component and the second oil component, and the second oil component can be phase-separated from the resin component and/or the first oil component to exude out from the coating film layer when the temperature drops to a predetermined value or less.

A wetting parameter "Z" determined by an absolute value of a difference between a value $SP_1$ of the solubility parameter of the coating film layer obtained by curing or drying the coating material of the present invention and a value

$SP_2$ of the solubility parameter of the second oil component is preferably 1.5 $(J/cm^3)^{1/2}$ or less, more preferably 0.8 $(J/cm^3)^{1/2}$ or less, still more preferably 0.5 $(J/cm^3)^{1/2}$ or less, and particularly preferably 0.3 $(J/cm^3)^{1/2}$ or less.

The lower limit of Z is not particularly limited as long as it is higher than 0 $(J/cm^3)^{1/2}$, but may be, for example, 0.001 $(J/cm^3)^{1/2}$ or more, and more preferably 0.01 $(J/cm^3)^{1/2}$ or more.

When Z is within the range described above, the wettability of the second oil component that bleeds to the coating film layer to be formed is increased, and the oil efficiently spreads to the surface of the coating film layer even when a small amount of oil bleeds out. As a result, the effect of preventing ice and/or snow adhesion can be exhibited with a smaller amount of oil.

The value of the solubility parameter of the coating film layer and the value of the solubility parameter of the second oil component can be calculated by the method described above.

The absolute value of the difference between the value $SP_1$ of the solubility parameter of the coating film layer obtained by curing or drying the coating material of the present invention and the value $SP_3$ of the solubility parameter of the oil component P is preferably 1.0 $(J/cm^3)^{1/2}$ or less, more preferably 0.8 $(J/cm^3)^{1/2}$ or less, and still more preferably 0.5 $(J/cm^3)^{1/2}$ or less.

The value of the solubility parameter of the coating film layer and the value of the solubility parameter of the oil component P can be calculated by the method described above.

The vapor pressure of the first oil component at 25°C is preferably 1 Pa or less.

The vapor pressure of the second oil component at 25°C is preferably 1 Pa or less.

A solubility parameter contribution value "F" of the coating film layer obtained by curing or drying the coating material of the present invention is preferably 0.1 or more, more preferably 0.2 or more, still more preferably 0.3 or more, particularly preferably 0.4 or more.

The upper limit of F may be, for example, 3.0 or less, preferably 2.5 or less, more preferably 2.0 or less, and still more preferably 1.5 or less.

F represents the degree of compatibility of the coating film layer. The larger the value is, the more incompatible it is. When F is within the range described above, the contained oil component easily bleeds out, and thus a high effect of preventing ice and/or snow adhesion can be exhibited.

Note that F can be calculated by the following formula.

$$F = f \times \varphi \times 100$$

Here, f can be calculated by the following formula using the "solubility parameter contribution values" ($f_{d1}$, $f_{p1}$, $f_{h1}$) of the "molecular units (compatible molecular units) constituting the monomer structure that is present in the largest amount in the coating film layer" and the "solubility parameter contribution values" ($f_{d2}$, $f_{p2}$, $f_{h2}$) of the "molecular units (incompatible molecular units) constituting the monomer structure in the second oil component for which the difference in solubility parameter from the compatible molecular unit is 0.01 $(J/cm^3)^{1/2}$ or more".

$$f = \{(f_{d1} - f_{d2})^2 + (f_{p1} - f_{p2})^2 + (f_{h1} - f_{h2})^2\}^{0.5}$$

When there is a plurality of incompatible molecular units, f is determined by averaging the respective contribution values. The solubility parameter contribution values $f_d$, $f_p$, and $f_h$ can be calculated by the following formulae, respectively.

$$f_d = \delta_d/(\delta_d + \delta_p + \delta_h)$$

$$f_p = \delta_p/(\delta_d + \delta_p + \delta_h)$$

$$f_h = \delta_h/(\delta_h + \delta_p + \delta_h)$$

$\delta_d$, $\delta_p$, and $\delta_h$ are parameters constituting the HSP value, and mean energy due to a dispersing force, energy due to a dipole interaction, and energy due to a hydrogen bond, respectively.

In addition, $\varphi$ means a mass fraction of the incompatible component, and can be calculated by the following formula.

$$\varphi = (1 - \text{gel fraction}) \times \text{mass ratio of incompatible molecular unit contained in oil}$$

component

In the above formula, the gel fraction can be determined by the following procedure.

1. The coating film layer was cut into a size of 2.0 cm × 4.5 cm, and a mass thereof was measured.
2. The cut coating film layer is placed in a vial bottle filled with 20 g of toluene and immersed in toluene at room temperature for 24 hours.
3. The coating film layer is taken out, and a mass of a residue after heating and drying the coating film layer at 150°C for 2 hours in a blow dryer is measured.
4. The gel fraction is calculated from the following formula.

$$\text{Gel fraction} = \text{mass (g) of residue after heating and drying/mass (g) of coating film}$$

layer before heating and drying

The "mass ratio of incompatible molecular unit contained in oil component" can be calculated by NMR measurement of a total oil component containing both the first oil component and the second oil component, which are contained in the coating film layer. The total oil component can be obtained by the following procedure.

1. The coating film layer is cut into a size of 2.0 cm × 4.5 cm, placed in a vial bottle filled with 20 g of toluene, and immersed in toluene at room temperature for 24 hours.
2. The coating film layer is taken out of the vial bottle and dried at 150°C for 12 hours in a blow dryer to obtain a residue. The residue is the total oil component.

As is clear from the above description, the first oil component and the second oil component do not need to be distinguished from each other in terms of substances, and may be distinguished from each other in terms of functions and actions described above. Therefore, both the first oil component and the second oil component do not need to be constituted by one oil component, and each of the first oil component and the second oil component may contain a plurality of oil components as long as the above-described conditions are satisfied.

(Other Components)

The coating material of the present invention may further contain an inorganic filler such as silica, a crosslinking agent, and a curing catalyst.
Examples of the silica include silica (e.g., AEROSIL 50, 130, 200, 300, R972, R974, R976, RX50, RX200, RX300, RY50, RY300, R7200, R8200, and R9200) manufactured by Nippon Aerosil Co., Ltd., etc.
Examples of the crosslinking agent include crosslinking agents (e.g., ethylsilicate 40, ethylsilicate 48, methylsilicate 51, methylsilicate 53A, EMS-485, ethylsilicate 28, ethylsilicate 28P, N-propylsilicate, N-butylsilicate, HAS-1, HAS-6, HAS-10, etc.) manufactured by Colcoat Co., Ltd., crosslinking agents (e.g., methyltrimethoxysilane, dimethyldimethoxysilane, tetraethoxysilane, methyltriethoxysilane, dimethyldiethoxysilane, n-propyltrimethoxysilane, n-propyltriethoxysilane, hexyltrimethoxysilane, hexyltriethoxysilane, octyltriethoxysilane, etc.) manufactured by Shin-Etsu Chemical Co., Ltd., and crosslinking agents (e.g., Dynasylan Silbond 40, etc.) manufactured by Evonik Japan Co., Ltd., etc.
Examples of the curing catalyst include curing catalysts (e.g., Pocat 25, etc.) manufactured by Nippon Chemical Industrial Co., Ltd., curing catalysts (e.g., dibutyltin dilaurate, etc.) manufactured by Tokyo Chemical Industry Co., Ltd., etc.

(Method for Producing Coating Material)

The coating material of the present invention can be obtained by mixing and/or stirring the components described above by a known method. The content of each component in the coating material is as follows.
The content of the resin component can be set to preferably 15 mass% or more, more preferably 20 mass% or more, and still more preferably 25 mass% or more, based on total mass of the finally formed coating film layer. The content of the resin component may be set to preferably 85 mass% or less, more preferably 80 mass% or less, and still more preferably 75 mass% or less, based on total mass of the finally formed coating film layer.
The content of the first oil component may be set to preferably 2 mass% or more, more preferably 5 mass% or more, and still more preferably 10 mass% or more, based on total mass of the finally formed coating film layer. The content of the first oil component may be set to preferably 85 mass% or less, more preferably 80 mass% or less, and still more preferably 75 mass% or less, based on total mass of the finally formed coating film layer.

The content of the second oil component may be set to preferably 2 mass% or more, more preferably 5 mass% or more, and still more preferably 10 mass% or more, based on total mass of the finally formed coating film layer. The content of the second oil component may be set to preferably 85 mass% or less, more preferably 80 mass% or less, and still more preferably 75 mass% or less, based on total mass of the finally formed coating film layer.

The content of the oil component P may be set to preferably 1 mass% or more, more preferably 3 mass% or more, and still more preferably 5 mass% or more, based on total mass of the finally formed coating film layer. The content of the oil component P may be set to preferably 75 mass% or less, more preferably 60 mass% or less, and still more preferably 50 mass% or less, based on total mass of the finally formed coating film layer.

The content of silica can be set to preferably 2 mass% or more, more preferably 5 mass% or more, and still more preferably 10 mass% or more, based on total mass of the finally formed coating film layer. The content of silica can be set to preferably 40 mass% or less, more preferably 30 mass% or less, and still more preferably 20 mass% or less, based on total mass of the finally formed coating film layer.

The content of the crosslinking agent may be set to preferably 0.1 mass% or more, more preferably 0.3 mass% or more, and still more preferably 0.5 mass% or more, based on total mass of the finally formed coating film layer. The content of the crosslinking agent may be set to preferably 50 mass% or less, more preferably 30 mass% or less, and still more preferably 15 mass% or less, based on total mass of the finally formed coating film layer.

The content of the curing catalyst may be set to preferably 0.01 mass% or more, more preferably 0.05 mass% or more, and still more preferably 0.1 mass% or more, based on total mass of the finally formed coating film layer. The content of the curing catalyst may be set to preferably 20 mass% or less, more preferably 10 mass% or less, and still more preferably 5 mass% or less, based on total mass of the finally formed coating film layer.

(Coating Film Layer)

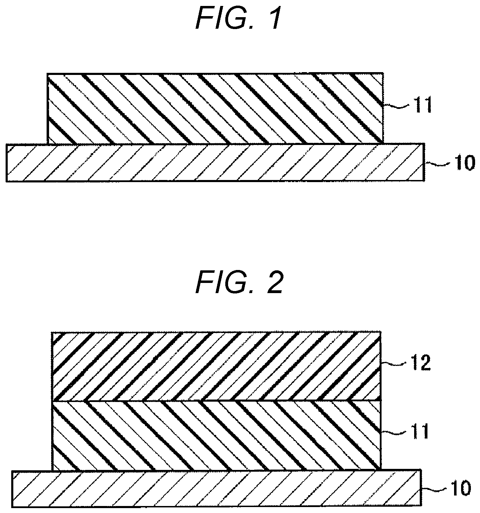

For example, as shown in FIG. 1, a first coating film layer 11 can be obtained by applying the coating material of the present invention to an object 10 to be coated.

As a coating method of the coating material of the present invention, general methods such as brush coating, spray coating, and various coater coating can be used. Coating is usually performed 1 and 2 times.

The thickness of the first coating film layer 11 is not particularly limited, but is preferably 1000 $\mu$m or less, because the oil component can easily permeate to the surface of the coating film layer, in other words, the oil permeability with respect to the first coating film layer 11 is obtained, and is preferably 50 $\mu$m or more from the viewpoint of strength.

Examples of the object 10 to be coated used in the present invention include polyurethane resins, polyurethane acrylic resins, rubber-based resins, vinyl chloride resins, polyester resins, silicone resins, elastomers, fluorine resins, polyamide resins, polyolefin resins (polyethylene, polypropylene, etc.), metal plates or metal foils (aluminum, copper, silver, iron, nickel, tin, stainless steel, etc.), concrete, ceramics, etc.

After the object 10 to be coated is coated with the coating material of the present invention, the coating material can be cured or dried by being left to stand in an environment of, for example, -20°C to 80°C, preferably 0 to 40°C for, for example, 8 hours to 300 hours, preferably 24 hours to 200 hours.

In the coating material of the present invention, it is preferable that the following formula (1) is satisfied.

$$\text{Gel fraction (\%) of post-decompression coating film layer - gel fraction (\%) of}$$
$$\text{initial coating film layer} \geq 0.5 \ (\%)\ldots(1)$$

(In the formula (1), the gel fraction (%) of the initial coating film layer is a value obtained by the following formula (2), and the gel fraction (%) of the post-decompression coating film layer is a value determined by the following formula (3)).

$$\text{Gel fraction (\%) of initial coating film layer} = \{\text{mass (g) of initial coating film layer}$$
$$\text{after heating and drying/mass (g) of initial coating film layer}\} \times 100\ldots(2)$$

(In the formula (2), the initial coating film layer is a coating film layer obtained by curing the coating material, and the initial coating film layer after heating and drying is a coating film layer obtained by immersing the coating film layer in toluene for 24 hours and heating and drying the coating film layer in an environment of 150°C for 2 hours).

$$\text{Gel fraction (\%) of post-decompression coating film layer} = \{\text{mass (g) of post-}$$

$$\text{decompression coating film layer after heating and drying/mass (g) of post-decompression}$$

$$\text{coating film layer}\} \times 100...(3)$$

(In the formula (3), the post-decompression coating film layer is a coating film layer obtained by drying the coating film layer obtained by curing the coating material under a reduced pressure of -0.1 MPa in an environment of 40°C for 16 hours, and the post-decompression coating film layer after heating and drying is a coating film layer obtained by immersing the post-decompression coating film layer in toluene for 24 hours, and heating and drying the post-decompression coating film layer in an environment of 150°C for 2 hours).

Hereinafter, the left side of the formula (1) may be referred to as a "difference in post-decompression gel fraction".

In the case where the formula (1) is satisfied, the first oil component gradually volatilizes, and a decrease in the concentration of the second oil component in the coating film layer can be prevented when the coating material of the present invention is cured to be used as the coating film layer. As a result, it is presumed that bleeding of the second oil component from the coating film layer continues, and a decrease in bleeding temperature can be prevented.

The difference in post-decompression gel fraction is more preferably 1% or more, even more preferably 1.5% or more, and particularly preferably 2% or more, from the viewpoint of preventing a decrease in bleeding temperature.

The gel fraction of the post-decompression coating film layer is preferably from 15% to 85%, more preferably from 20% to 80%, still more preferably from 25% to 75%.

The gel fraction of the initial coating film layer is preferably 15% to 85%, more preferably 20% to 80%, and still more preferably 25% to 75%.

For example, as shown in FIG. 2, a second coating film layer 12 can be formed on the coating film layer 11 obtained from the coating material of the present invention with a top-coat coating material as necessary.

The top-coat coating material is not particularly limited, and for example, the same coating material as the coating material of the present invention can be used, but the top-coat coating material may not contain an oil component.

As a coating method of the top-coat coating material, general methods such as brush coating, spray coating, and various coater coating can be used. Coating is usually performed 1 and 2 times.

The thickness of the second coating film layer 12 is not particularly limited, but is preferably 500 $\mu$m or less, because the oil component can easily permeate to the surface of the coating film layer, in other words, the oil permeability with respect to the second coating film layer 12 is obtained, and is preferably 50 $\mu$m or more from the viewpoint of strength.

The curing or drying temperature and the curing or drying time at the time of coating the first coating film layer 11 with the top-coat coating material are the same as the curing or drying temperature and the curing or drying time at the time of coating the object 10 to be coated with the coating material of the present invention.

The curing or drying of the coating material of the present invention and the curing or drying of the top-coat coating material may be performed simultaneously or separately.

[Coating Film Layer, Laminate]

A coating film layer of the present invention is obtained by curing or drying the coating material of the present invention.

A laminate of the present invention contains the coating film layer of the present invention and a pressure-sensitive adhesive layer.

The laminate of the present invention is obtained by curing or drying the coating material of the present invention in advance in a state where a thin film having a thickness of, for example, 10 $\mu$m to 1000 $\mu$m is formed to form a coating film layer, and providing a pressure-sensitive adhesive layer on the coating film layer by using a known process of related art.

The pressure-sensitive adhesive layer can be used to cause a coating film layer obtained by curing or drying the coating material of the present invention to adhere to the surface of various objects.

The pressure-sensitive adhesive layer is not particularly limited, and examples thereof include an acrylic resin-based pressure-sensitive adhesive, an epoxy resin-based pressure-sensitive adhesive, an amino resin-based pressure-sensitive adhesive, a vinyl resin-based (such as a vinyl acetate-based polymer) pressure-sensitive adhesive, a curable acrylic resin-based pressure-sensitive adhesive, and a silicone resin-based pressure-sensitive adhesive, etc.

The pressure-sensitive adhesive layer may be an oil-impermeable pressure-sensitive adhesive layer in order to prevent the oil component from flowing out of the coating film layer.

The oil-impermeable pressure-sensitive adhesive layer is not particularly limited, and examples thereof include an acrylic resin-based pressure-sensitive adhesive, an epoxy resin-based pressure-sensitive adhesive, an amino resin-based pressure-sensitive adhesive, a vinyl resin-based (such as a vinyl acetate-based polymer) pressure-sensitive adhesive, a curable acrylic resin-based pressure-sensitive adhesive, and a silicone resin-based pressure-sensitive adhesive, etc.

[Examples]

Hereinafter, the present invention will be described in more detail with reference to Examples and the like, but the present invention is not limited to the following Examples.

[Test Example 1]

<Preparation of Coating Film Layer>

[Example 1-1]

As a coating material component, a resin component: X-21-5849 (manufactured by Shin-Etsu Chemical Co., Ltd.), a first oil component: dimethyl siloxane oil (manufactured by Shin-Etsu Chemical Co., Ltd., product number: KF-96 (50cs)), a second oil component: phenyl oil (manufactured by Momentive Performance Co., Ltd., product number: TSF-437), an oil component P: dimethyl siloxane oil (manufactured by Shin-Etsu Chemical Co., Ltd., product number: KF-96 (2cs)), silica (manufactured by Nippon Aerosil Co., Ltd., product number: R976), a crosslinking agent (manufactured by Colcoat Co., Ltd., product number: ethylsilicate 40), and a curing catalyst (manufactured by Nippon Chemical Industry Co., Ltd., product number: Pucat 25) were prepared.
The resin component (37 parts by mass), the first oil component (5.9 parts by mass), the second oil component (40.7 parts by mass), the oil component P (8.9 parts by mass), and silica (2.2 parts by mass) were mixed under a condition of 25°C and 101 kPa. The obtained mixed solution was stirred with a spatula at a speed of about 120 rpm for 60 seconds, and then stirred with a disper (manufactured by Primix Corporation, LABOLUTION) at a speed of 5000 rpm for 10 minutes. Then, the crosslinking agent (3.3 parts by mass) and the curing catalyst (2.0 parts by mass) were added to the mixture, and the mixture was stirred with a spatula at a speed of about 120 rpm for 60 seconds to obtain a coating material.
The obtained coating material was applied to a polyethylene terephthalate (PET) film (Lumirror (registered trademark) 75-S10, manufactured by Toray Industries, Inc.), and cured in an environment of 25°C for one week to form an initial coating film layer.
The initial coating film layer was placed in a decompressing type dryer (DP-43, manufactured by Yamato Scientific Co., Ltd.), and the pressure was reduced to -0.1 MPa by a vacuum pump in an environment of 40°C. The pressure was continuously reduced by the vacuum pump for 30 minutes, and then the initial coating film layer was dried under a reduced pressure of -0.1 MPa for 16 hours in an environment of 40°C in a state where the pump was stopped, thereby obtaining a post-decompression coating film layer.
Here, 1 g of methylsiloxane oil (manufactured by Shin-Etsu Chemical Co., Ltd., product number: KF-96 (2cs)) was placed in a 6 mL vial bottle. The amount of volatilization of oil under the same decompression condition (condition A) as when the post-decompression coating film layer was obtained and the amount of volatilization of oil under 25°C and normal pressure condition (condition B) were measured. From the measurement results, it was found that the volatilization rate of the oil under the condition A was about 750 times the volatilization rate of the oil under the condition B. Therefore, it was determined that one hour in the condition A corresponds to about one month in the condition B.

[Example 1-2]

An initial coating film layer and a post-decompression coating film layer were formed in the same manner as in Example 1-1 except that 4.45 parts by mass of dimethylsiloxane oil (manufactured by Shin-Etsu Chemical Co., Ltd., product number: KF-96 (2cs)) and 4.45 parts by mass of dimethylsiloxane oil (manufactured by Shin-Etsu Chemical Co., Ltd., product number: KF-96 (5cs)) were used as the oil component P.

[Example 1-3]

An initial coating film layer and a post-decompression coating film layer were formed in the same manner as in Example 1-1 except that 8.9 parts by mass of dimethylsiloxane oil (manufactured by Shin-Etsu Chemical Co., Ltd., product number: KF-96 (5cs)) was used as the oil component P.

[Comparative Example 1-1]

An initial coating film layer and a post-decompression coating film layer were formed in the same manner as in Example 1-1 except that 14.8 parts by mass of dimethylsiloxane oil (manufactured by Shin-Etsu Chemical Co., Ltd., product number: KF-96 (50cs)) as a first oil component was used without using the oil component P.

<Mass Reduction Rate>

The mass reduction rate of each oil component was measured by the following method. The results are shown below.

First oil component "KF-96 (50cs)": 1.98 mass%
Second oil component "TSF-437": 5.10 mass%
Oil component P: "KF-96 (2cs)": 27.96 mass%
Oil component P: "KF-96 (2cs): KF-96 (5cs) = 1:1": 18.12 mass%
Oil component P: "KF-96 (5cs)": 8.32 mass%

(Measurement Method)

A 6 mL vial bottle (inner diameter of mouth × body diameter × total length: 10 mm × 18 mm × 40 mm) was prepared, and a mass (mass a) thereof was measured.
Oil was placed in the vial bottle, and a mass (mass b) of the vial bottle containing the oil was measured.
From mass b - mass a, a mass (mass c) of the oil contained in the vial bottle was determined.
The vial bottle containing the oil was left to stand in an environment of 25°C and - 0.1 MPa for 5 hours by a vacuum dryer (DP-43, manufactured by Yamato Scientific Co., Ltd.).
A mass (mass d) of the vial bottle containing the oil after being left to stand for 5 hours was measured.
The mass reduction rate of the oil component was determined by the following formula.

$$\text{Mass reduction rate (mass\%)} = \{(\text{mass b - mass d}) / \text{mass c}\} \times 100$$

The above operation was performed twice, and the average value thereof was adopted as the mass reduction rate.

<Value (SP Value) of Solubility Parameter>

Fourier transform nuclear magnetic resonance spectroscopy analysis was performed to examine the type and molar ratio of molecular units constituting a molecular structure of each component. A solubility parameter (Hansen solubility parameter) of each molecular unit was determined by calculating a weighted average in terms of molar ratio.
The Hansen solubility parameter of each molecular unit can be determined by a molecular group contribution method using software "HSPiP, Hansen Solubility Parameters in Practice ver4" available from a link (https://hansen-soLubiLity.com/). Specifically, HSP values ($\delta_d$, $\delta_p$, $\delta_h$) of the respective units can be calculated by inputting the respective constituent units in a target substance by a SMILES notation.
Then, an SP value of each component and a difference (SP value difference $\alpha$) between the SP value of the resin component and the SP value of the oil component P were determined. The results are shown below.

Resin component (X-21-5849): 11.8
First oil component (KF-96 (50cs)): 11.8
Second oil component (TSF-437): 13.5
Oil component P: (KF-96 (2cs)): 11.8
(KF-96(5cs)): 11.8
SP value difference $\alpha$: 0

<Solubility parameter contribution value A>

A solubility parameter contribution value A of each component was determined in accordance with the above formula (10). The results are shown below.

First Oil Component (KF-96 (50cs))

Solubility parameter contribution value A: 0

f: 0

m: 0

Second Oil Component (TSF-437)

Solubility parameter contribution value A: 3.8

f: 0.08

m: 0.47

Oil component P: (KF-96 (2cs))

Solubility parameter contribution value A: 0

f: 0

m: 0

Oil component P: (KF-96 (5cs))

Solubility parameter contribution value A: 0

f: 0

m: 0

<Evaluation>

The following evaluations were performed using the obtained initial coating film layer and the post-decompression coating film layer. The results are shown in Table 2.

[Gel Fraction]

(Gel Fraction of Initial Coating Film Layer)

The initial coating film layer was cut into a size of 3.0 cm × 3.0 cm, and a mass (g) of the initial coating film layer was measured.

The cut initial coating film layer was placed in a vial bottle filled with 20 g of toluene and immersed in toluene at 20°C for 24 hours. Thereafter, the initial coating film layer was taken out of the vial bottle, dried by heating in an environment of 150°C for 2 hours in a blow dryer, and a mass (g) of the initial coating film layer after heating and drying was measured.

The gel fraction of the initial coating film layer was determined by the following formula (2).

$$\text{Gel fraction (\%) of initial coating film layer} = \{\text{mass (g) of initial coating film layer after heating and drying/mass (g) of initial coating film layer}\} \times 100\ldots(2)$$

(Gel Fraction of Post-decompression Coating Film Layer)

The post-decompression coating film layer was cut into a size of 3.0 cm × 3.0 cm, and a mass (g) of the post-decompression coating film layer was measured.

The cut post-decompression coating film layer was placed in a vial bottle filled with 20 g of toluene and immersed in toluene at 20°C for 24 hours. Thereafter, the post-decompression coating film layer was taken out of the vial bottle, dried by heating in an environment of 150°C for 2 hours in a blow dryer, and a mass (g) of the post-decompression coating film layer after heating and drying was measured.

The gel fraction of the post-decompression coating film layer was determined by the following formula (3).

$$\text{Gel fraction (\%) of post-decompression coating film layer} = \{\text{mass (g) of post-decompression coating film layer after heating and drying/mass (g) of post-decompression coating film layer}\} \times 100 \ldots (3)$$

(Difference in Post-decompression Gel Fraction)

A value of the gel fraction (%) of the post-decompression coating film layer - the gel fraction (%) of the initial coating film layer was determined.

[Ice Adhesion Strength]

A force required for moving ice blocks adhering on the initial coating film layer in an environment of -20°C was measured. For convenience, the magnitude of this force is defined as an "ice adhesion strength" in the present specification.

The ice adhesion strength was measured by the following method.

First, a cylindrical ice block was produced. The ice block was produced by placing a stainless ring (inner diameter: 25 mm) on the bottom surface of a styrol square case 16 type (manufactured by AS ONE Corporation), pouring 6 g of pure water into the stainless ring, freezing the pure water at -20°C for 16 hours or more, and removing the stainless ring after freezing.

Next, a PET film and the initial coating film layer, which are left to stand in an environment of -20°C for 16 hours, were attached to a stainless plate placed in parallel to the floor surface so that the initial coating film layer was on the surface. The cylindrical ice block having an adhesion area of 4.9 cm$^2$ was adhered thereto.

After 3 hours from the setting of the environmental temperature to -20°C and the adhesion of the ice block, the ice block was pressed from a direction parallel to the floor surface in an environment of -20°C with a load cell (DPU-50 manufactured by Imada Co., Ltd., attachment jig A type A-4) at a speed of 0.1 mm/sec, and a load applied for 40 seconds was measured with a force gauge (ZTS-50N manufactured by Imada Co., Ltd.). A value obtained by dividing the measured maximum load by the adhesion area of 4.9 cm$^2$ was recorded as the ice adhesion strength. The test was performed three times, and the average value thereof was determined.

This measurement method was determined with reference to "Investigation to Prevent Icing (Part I), Hokkaido Industrial Research Institute Report No. 292 (1993)". The ice adhesion strength decreased substantially proportionally in response to an increase in the surface oil amount at least at -20°C.

[Bleeding Temperature]

(Bleeding Temperature of Initial Coating Film Layer)

The initial coating film layer was placed on a Peltier device (VPE-35, manufactured by Bips Corporation). The sample was cooled by 1°C from 5°C to -15°C under $N_2$ purge (2 L/min) (retention time: 3 minutes), and the temperature at which oil began to bleed out from the surface of the initial coating film layer was confirmed. Bleeding of the oil was observed with a microscope.

(Bleeding Temperature of Coating Film Layer after Durability Test)

When the initial coating film layer was left to stand in an environment of -10°C for 3 hours, the oil that bleeds out on the surface of the initial coating film layer was collected in an environment of -10°C with a cell scraper (CSS-10, manufactured by Kernian Co., Ltd.), and the oil was absorbed until a change in the mass (oil absorption amount) of oil-absorbing paper was not observed. The oil collection by the cell scraper and the absorption by the oil-absorbing paper were repeated seven times per minute.

Thereafter, the obtained coating film layer was placed in a decompressing type dryer (DP-43, manufactured by Yamato Scientific Co., Ltd.), and the pressure was reduced to -0.1 MPa by a vacuum pump in an environment of 40°C.

In Example 1-1, the pressure was continuously reduced by a vacuum pump for 30 minutes, and then the initial coating film layer was dried under a reduced pressure of -0.1 MPa for 6 hours in an environment of 40°C in a state where the pump was stopped, thereby obtaining a coating film layer after the durability test.

In Example 1-2, the pressure was continuously reduced by a vacuum pump for 30 minutes, and then the initial coating film layer was dried under a reduced pressure of -0.1 MPa for 10 hours in an environment of 40°C in a state where the pump was stopped, thereby obtaining a coating film layer after the durability test.

In Example 1-3 and Comparative Example 1-1, the pressure was continuously reduced by a vacuum pump for 30 minutes, and then the initial coating film layer was dried under a reduced pressure of -0.1 MPa for 16 hours in an environment of 40°C in a state where the pump was stopped, thereby obtaining a coating film layer after the durability test.

The temperature at which oil starts to bleed out from the surface of the coating film layer was confirmed in the same manner as (in the case of bleeding temperature of initial coating film layer), except that the coating film layer after the durability test described above was used instead of the initial coating film layer.

The temperature at which oil starts to bleed out from the surface of the coating film layer was confirmed in the same manner as (in the case of bleeding temperature of initial coating film layer), except that the coating film layer after the durability test described above was used instead of the initial coating film layer.

[Table 1]

Table 1

| | Oil Component P | | | | | SP Value Difference $\alpha$ |
|---|---|---|---|---|---|---|
| | Vapor Pressure at 25°C (Pa) | Mass Reduction Rate (mass%) | Mw | SP Value | A | |
| Example 1-1 | 7.8 | 27.96 | 385 | 11.8 | 0 | 0 |
| Example 1-2 | no data | 18.14 | 385/680 | 11.8 | 0 | 0 |
| Example 1-3 | no data | 8.32 | 680 | 11.8 | 0 | 0 |
| Comparative Example 1-1 | - | - | - | - | - | - |

[Table 2]

Table 2

| | Gel Fraction | | | Ice Adhesion Strength (N/cm²) | Bleeding Temperature | |
|---|---|---|---|---|---|---|
| | Initial Coating Film Layer | Post-decompression Coating Film Layer | Difference in Post-decompression Gel Fraction | | Initial Coating Film Layer | Coating Film Layer after Durability Test |
| Example 1-1 | 46.7% | 49.1% | 2.4% | < 0.1 | 0°C | 0°C |
| Example 1-2 | 45.3% | 47.3% | 2.0% | < 0.1 | -2°C | -2°C |
| Example 1-3 | 45.5% | 46.8% | 1.3% | < 0.1 | 1°C | 1°C |
| Comparative Example 1-1 | 44.4% | 44.8% | 0.4% | < 0.1 | -3°C | -7°C |

From the results shown in Table 2, it was found that a coating film layer capable of preventing a decrease in bleeding temperature over time and having an excellent ice and/or snow adhesion prevention function can be obtained from the coating material of the present invention.

Specifically, it was confirmed in Examples 1-1, that the same bleeding temperature as that of the initial coating film layer could be maintained even in the coating film layer after the durability test corresponding to 6 months later, in Examples 1-2, the same bleeding temperature as that of the initial coating film layer could be maintained even in the coating film layer after the durability test corresponding to 10 months later, and in Examples 1-3, the same bleeding temperature as that of the initial coating film layer could be maintained even in the coating film layer after the durability test corresponding to 16 months later.

[Test Example 2]

<Preparation of Coating Film Layer>

[Example 2-1]

As a coating material, a resin component, a first oil component, a second oil component: carbinol oil (manufactured by Shin-Etsu Chemical Co., Ltd., product number: KF-6002), an oil component P: cyclopentasiloxane (manufactured by Shin-Etsu Chemical Co., Ltd., product number: KF-995), silica, a crosslinking agent, and a curing catalyst (manufactured by Tokyo Chemical Industry Co., Ltd., product name: Dibutyltin Dilaurate) were prepared.

The resin component, the first oil component, the silica, and the crosslinking agent used were the same as those used in Example 1-1.

The resin component (38.0 parts by mass), the first oil component (26.0 parts by mass), the second oil component (31.0 parts by mass), and silica (2.3 parts by mass) were mixed under a condition of 25°C and 101 kPa. The obtained mixed solution was stirred with a spatula at a speed of about 120 rpm for 60 seconds, and then stirred with a disper (manufactured by Primix Corporation, LABOLUTION) at a speed of 5000 rpm for 10 minutes. Then, the oil component P (5.0 parts by mass), the crosslinking agent (1.7 parts by mass), and the curing catalyst (1.0 part by mass) were added to the mixed liquid, and the mixture was stirred with a spatula at a speed of about 120 rpm for 60 seconds to obtain a coating material.

The obtained coating material was applied to a polyethylene terephthalate (PET) film (Lumirror (registered trademark) 75-S10, manufactured by Toray Industries, Inc.), and cured in an environment of 25°C for one week to form a coating film layer (25°C).

In addition, a coating film layer (0°C) was formed in accordance with the method described above, except that the content of the first oil component and the content of the second oil component were set as shown in Table 3, and the temperature at which the coating material was cured was set to 0°C.

[Examples 2-2 to 2-6 and Comparative Example 2-1]

A coating film layer (25°C) and a coating film layer (0°C) were formed in the same manner as in Example 2-1 except that the type of the oil component P, the content of the oil component P, the content of the first oil component, and the content of the second oil component were set as shown in Table 3.

In Table 3, "KF-96 (1.5cs)" means methylsiloxane oil (manufactured by Shin-Etsu Chemical Co., Ltd., product number: KF-96 (1.5cs)), and "KF-96 (2cs)" means methylsiloxane oil (manufactured by Shin-Etsu Chemical Co., Ltd., product number: KF-96 (2cs)).

<Mass Reduction Rate>

The mass reduction rate of each oil component was measured by the same method as in Test Example 1. The results are shown below.

 First oil component (KF-96 (50cs)): 1.98 mass%
 Second oil component (KF-6002): 4.27 mass%
 Oil component P (KF-995): 30.84 mass%
 Oil component P (KF-96 (1.5 cs)): 100.03 mass%
 Oil component P (KF-96 (2cs)): 27.96 mass%

<Value (SP Value) of Solubility Parameter>

The SP value of each component and a difference (SP value difference $\alpha$) between the SP value of the resin component and the SP value of the oil component P were determined in the same manner as in Test Example 1. The results are shown below.

 Resin component (X-21-5849): 11.8

First oil component (KF-96 (50cs)): 11.8
Second oil component (KF-6002): 12
Oil component P (KF-995): 11.8
Oil component P (KF-96 (1.5 cs)): 11.8
Oil component P (KF-96 (2cs)): 11.8
SP value difference $\alpha$: 0

<Solubility parameter contribution value A>

The solubility parameter contribution value A of each oil component P was determined by the above formula (10). The results are shown below.

First Oil Component (KF-96 (50cs))

Solubility parameter contribution value A: 0

f: 0

m: 0

Second oil component (KF-6002)

Solubility parameter contribution value A: 5.5

f: 0.5

m: 0.11

Oil component P (KF-995), KF-96 (1.5cs), KF-96 (2cs)

Solubility parameter contribution value A: 0

f: 0

m: 0

<Evaluation>

The obtained coating film layer (25°C) and coating film layer (0° C) were evaluated as follows. The results are shown in Table 4.

[Value (SP Value) of Solubility Parameter]

Fourier transform nuclear magnetic resonance spectroscopy analysis was performed to examine the type and molar ratio of the molecular unit constituting the molecular structure of each coating film layer. A solubility parameter (Hansen solubility parameter) of each molecular unit was determined by calculating a weighted average in terms of molar ratio.
The Hansen solubility parameter of each molecular unit can be determined by a molecular group contribution method using software "HSPiP, Hansen Solubility Parameters in Practice ver4" available from a link (https://hansen-soLubiLity.com/). Specifically, HSP values ($\delta_d$, $\delta_p$, $\delta_h$) of the respective units can be calculated by inputting the respective constituent units in a target substance by a SMILES notation.
Then, a difference (SP value difference $\beta$) between the SP value of each coating film layer and the SP value of the oil component P was determined. The SP value of the coating film layer (25°C) and the SP value of the coating film layer (0°C) were the same.

[Bleed Oil Amount]

The bleed oil amount ($\mu g/cm^2$) of the coating film layer (25°C) and the coating film layer (0°C) during the curing period (one week) was measured.

The reduction rate (%) of the bleed oil amount when the curing temperature was changed from 25°C to 0°C was determined by the following formula.

$$\text{Reduction rate of bleed oil amount (\%)} = [1 - (b/a)] \times 100$$

In the above formula, a represents the bleed oil amount in the coating film layer (25°C), and b represents the bleed oil amount in the coating film layer (0°C).

As shown in Table 3, the content of the first oil component and the content of the second oil component are different between the coating film layer (25°C) and the coating film layer (0°C). This is because the curing rate was different between the curing at 25°C and the curing at 0°C, and in the same curing period (one week), the bleeding initiation temperatures of the coating film layer (25°C) and the coating film layer (0°C) were not the same, and the content of the first oil component and the content of the second oil component were adjusted so that the bleeding initiation temperatures of both the coating film layer (25°C) and the coating film layer (0°C) were 0°C.

[Table 3]

Table 3

| | Coating Film Layer (25°C) | | Coating Film Layer (0°C) | | Oil Component P | | | | | | | SP Value Difference $\alpha$ |
|---|---|---|---|---|---|---|---|---|---|---|---|---|
| | First Oil Component (part by mass) | Second Oil Component (part by mass) | First Oil Component (part by mass) | Second Oil Component (part by mass) | Product Name | Vapor Pressure at 25°C (Pa) | Mass Reduction Rate (mass%) | Mw | SP Value | A | Content (part by mass) | |
| Example 2-1 | 26.0 | 31.0 | 20.0 | 37.0 | KF-995 | 33.2 | 30.84 | 370 | 11.8 | 0 | 5.0 | 0 |
| Example 2-2 | 26.0 | 31.0 | 20.0 | 37.0 | | | | | | | 10.0 | |
| Example 2-3 | 26.0 | 31.0 | 20.0 | 37.0 | | | | | | | 20.0 | |
| Example 2-4 | 26.0 | 31.0 | 20.0 | 37.0 | | | | | | | 30.0 | |
| Example 2-5 | 26.0 | 31.0 | 20.0 | 37.0 | KF-96 (1.5cs) | 130 | 100.03 | 311 | 11.8 | 0 | 10.0 | 0 |
| Example 2-6 | 22.8 | 34.2 | 16.3 | 40.7 | KF-96 (2cs) | 7.8 | 27.96 | 385 | 11.8 | 0 | 10.0 | 0 |
| Comparative Example 2-1 | 26.0 | 31.0 | 20.0 | 37.0 | - | - | - | - | - | - | - | - |

[Table 4]

Table 4

| | SP Value (J/cm³)^½ | | | Bleed Oil Amount | | |
|---|---|---|---|---|---|---|
| | Coating Film Layer (25°C) Coating Film Layer (0°C) | Oil Component P | SP Value Difference β | Coating Film Layer (25°C) ($\mu$g/cm²) | Coating Film Layer (0°C) ($\mu$g/cm²) | Reduction Rate (%) |
| Example 2-1 | 11.9 | 11.8 | 0.1 | 2320 | 1570 | 32 |
| Example 2-2 | | | | 2382 | 2286 | 4 |
| Example 2-3 | | | | 2420 | 2370 | 2 |
| Example 2-4 | | | | 2450 | 2390 | 2 |
| Example 2-5 | | 11.8 | 0.1 | 2386 | 2176 | 9 |
| Example 2-6 | | 11.8 | 0.1 | 2389 | 876 | 63 |
| Comparative Example 2-1 | | - | - | 2390 | 773 | 68 |

From the results in Table 4, it was found that a coating film layer in which the bleed oil amount is less likely to decrease even when cured at a low temperature can be obtained from the coating material of the present invention.

Although the present invention is described in detail with reference to the specific embodiment, it will be apparent to those skilled in the art that various changes and modifications can be made without departing from the spirit and scope of the present invention. The present application is based on a Japanese Patent Application (Patent Application No. 2020-058774) filed on March 27, 2020, and a Japanese Patent Application (Patent Application No. 2020-213811) filed on December 23, 2020, contents of which are incorporated herein by reference.

REFERENCE SIGNS LIST

10 Object to be coated
11 First coating film layer
12 Second coating film layer

**Claims**

1. A coating material comprising a resin component and at least one oil component, wherein

the oil component can exude out from a cured or dried coating film layer to which the coating material has been applied when a temperature drops to a predetermined value or less,
the coating material further contains an oil component P,
an absolute value of a difference between a value of a solubility parameter of the oil component P and a value of a solubility parameter of the resin component is less than 0.4 (J/cm³)^½, and
the oil component P has a solubility parameter contribution value A determined by the following formula (10) of 3 or less, and satisfies at least one of the following conditions (a) and (b):

(a) a vapor pressure at 25°C is 0.01 Pa or more, and
(b) a mass reduction rate when left to stand in an environment of 25°C and -0.1 MPa for 5 hours is 2.2 mass% or more,

$$\text{Solubility parameter contribution value A} = f \times m \times 100 \ldots (10)$$

(in the formula (10), f can be calculated by the following formula (20), and m means a mass fraction of an incompatible molecular unit in the oil component P),

$$f = \{(f_{d1} - f_{d2})^2 + (f_{p1} - f_{p2})^2 + (f_{h1} - f_{h2})^2\}^{0.5}...(20)$$

(in the formula (20), $f_{a1}$ is a value determined by the following formula (3a1), $f_{d2}$ is a value determined by the following formula (3a2), $f_{p1}$ is a value determined by the following formula (3a3), $f_{p2}$ is a value determined by the following formula (3a4), $f_{h1}$ is a value determined by the following formula (3a5), and $f_{h2}$ is a value determined by the following formula (3a6)),

$$f_{d1} = \delta_{d1}/(\delta_{d1} + \delta_{p1} + \delta_{h1})...(3a1)$$

$$f_{d2} = \delta_{d2}/(\delta_{d2} + \delta_{p2} + \delta_{h2})...(3a2)$$

$$f_{p1} = \delta_{p1}/(\delta_{d1} + \delta_{p1} + \delta_{h1})...(3a3)$$

$$f_{p2} = \delta_{p2}/(\delta_{d2} + \delta_{p2} + \delta_{h2})...(3a4)$$

$$f_{h1} = \delta_{h1}/(\delta_{d1} + \delta_{p1} + \delta_{h1})...(3a5)$$

$$f_{h2} = \delta_{h2}/(\delta_{d2} + \delta_{p2} + \delta_{h2})...(3a6)$$

(in the formulae (3a1) to (3a6),

$\delta_{d1}$ is energy $(J/cm^3)^{1/2}$ due to a dispersing force of a compatible molecular unit,
$\delta_{d2}$ is energy $(J/cm^3)^{1/2}$ due to a dispersing force of an incompatible molecular unit,
$\delta_{p1}$ is energy $(J/cm^3)^{1/2}$ due to a dipole interaction of the compatible molecular unit,
$\delta_{p2}$ is energy $(J/cm^3)^{1/2}$ due to a dipole interaction of the incompatible molecular unit,
$\delta_{h1}$ is energy $(J/cm^3)^{1/2}$ due to a hydrogen bond of the compatible molecular unit,
$\delta_{h2}$ is energy $(J/cm^3)^{1/2}$ due to a hydrogen bond of the incompatible molecular unit, the compatible molecular unit is a molecular unit that is present in the largest amount in the oil component P,
the incompatible molecular unit is a molecular unit in the oil component P for which a difference in solubility parameter from the compatible molecular unit is 0.01 $(J/cm^3)^{1/2}$ or more, and
when there is a plurality of incompatible molecular units, $f_{d2}$, $f_{p2}$, and $f_{h2}$ of all the incompatible molecular units are separately determined, and for each of $f_{d2}$, $f_{p2}$, and $f_{h2}$, a weighted average is obtained by a mass ratio (mass of specific incompatible molecular unit/total mass of all incompatible molecular units) to determine $f_{d2}$, $f_{p2}$, and $f_{h2}$).

2. The coating material according to claim 1, wherein a vapor pressure of the oil component P at 25°C is 1 Pa or more.

3. The coating material according to claim 1 or 2, wherein a mass reduction rate of the oil component P when left to stand in an environment of 25°C and -0.1 MPa for 5 hours is 25 mass% or more.

4. The coating material according to any one of claims 1 to 3, wherein the following formula (1) is satisfied:

$$\text{Gel fraction (\%) of post-decompression coating film layer - gel fraction (\%) of}$$
$$\text{initial coating film layer} \geq 0.5 \text{ (\%)}...(1)$$

(in the formula (1), the gel fraction (%) of the initial coating film layer is a value obtained by the following formula (2), and the gel fraction (%) of the post-decompression coating film layer is a value determined by the following formula (3)),

$$\text{Gel fraction (\%) of initial coating film layer} = \{\text{mass (g) of initial coating film layer after heating and drying/mass (g) of initial coating film layer}\} \times 100\ldots(2)$$

(in the formula (2), the initial coating film layer is a coating film layer obtained by curing the coating material, and the initial coating film layer after heating and drying is a coating film layer obtained by immersing the coating film layer in toluene for 24 hours and heating and drying the coating film layer in an environment of 150°C for 2 hours),

$$\text{Gel fraction (\%) of post-decompression coating film layer} = \{\text{mass (g) of post-decompression coating film layer after heating and drying/mass (g) of post-decompression coating film layer}\} \times 100\ldots(3)$$

(in the formula (3), the post-decompression coating film layer is a coating film layer obtained by drying the coating film layer obtained by curing the coating material under a reduced pressure of -0.1 MPa in an environment of 40°C for 16 hours, and the post-decompression coating film layer after heating and drying is a coating film layer obtained by immersing the post-decompression coating film layer in toluene for 24 hours, and heating and drying the post-decompression coating film layer in an environment of 150°C for 2 hours).

5. A coating film layer obtained by curing the coating material according to any one of claims 1 to 4.

6. A laminate comprising the coating film layer according to claim 5 and a pressure-sensitive adhesive layer.

*FIG. 1*

*FIG. 2*

## INTERNATIONAL SEARCH REPORT

| International application No. |
|---|
| PCT/JP2021/010950 |

| A. CLASSIFICATION OF SUBJECT MATTER |
|---|
| C09D 201/00(2006.01)i; C09K 3/18(2006.01)i; C09D 7/63(2018.01)i; C09J 7/38(2018.01)i |
| FI: C09D201/00; C09D7/63; C09J7/38; C09K3/18 104 |
| According to International Patent Classification (IPC) or to both national classification and IPC |

| B. FIELDS SEARCHED |
|---|

Minimum documentation searched (classification system followed by classification symbols)
C09D201/00; C09K3/18; C09D7/63; C09J7/38

| Documentation searched other than minimum documentation to the extent that such documents are included in the fields searched | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 2018-172676 A (NITTO DENKO CORP.) 08 November 2018 (2018-11-08) entire text | 1-6 |
| A | JP 2000-026844 A (NTT ADVANCED TECHNOLOGY CORPORATION) 25 January 2000 (2000-01-25) entire text | 1-6 |
| A | JP 02-503090 A (QMC INDUSTRIAL RESEARCH LIMITE) 27 September 1990 (1990-09-27) entire text | 1-6 |
| A | US 2015/0361319 A1 (UNIVERSITY OF PITTSBURGH-OF THE COMMONWEALTH SYSTEM OF HIGHER EDUCATION) 17 December 2015 (2015-12-17) entire text | 1-6 |

| ☒ Further documents are listed in the continuation of Box C. | ☒ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 June 2021 (03.06.2021) | 15 June 2012 (15.06.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2021/010950

C (Continuation). DOCUMENTS CONSIDERED TO BE RELEVANT

| Category* | Citation of document, with indication, where appropriate, of the relevant passages | Relevant to claim No. |
|---|---|---|
| A | JP 2010-013591 A (SHIN-ETSU CHEMICAL CO., LTD.) 21 January 2010 (2010-01-21) entire text | 1-6 |
| A | JP 2005-344052 A (DAIKIN INDUSTRIES, LTD.) 15 December 2005 (2005-12-15) entire text | 1-6 |
| A | WO 2014/103894 A1 (ASAHI GLASS CO., LTD.) 03 July 2014 (2014-07-03) entire text | 1-6 |
| P, A | WO 2020/096071 A1 (NITTO DENKO CORP.) 14 May 2020 (2020-05-14) entire text | 1-6 |

Form PCT/ISA/210 (continuation of second sheet) (January 2015)

| INTERNATIONAL SEARCH REPORT<br>Information on patent family members | | International application No.<br>PCT/JP2021/010950 | |
|---|---|---|---|
| Patent Documents referred in the Report | Publication Date | Patent Family | Publication Date |
| JP 2018-172676 A | 08 Nov. 2018 | US 2020/0032109 A1<br>entire text<br>WO 2018/182023 A1<br>EP 3604466 A1<br>CN 110475833 A | |
| JP 2000-026844 A | 25 Jan. 2000 | (Family: none) | |
| JP 02-503090 A | 27 Sep. 1990 | GB 2224030 A<br>entire text<br>WO 1988/008018 A1 | |
| US 2015/0361319 A | 17 Dec. 2015 | WO 2014/120961 A1 | |
| JP 2010-013591 A | 21 Jan. 2010 | US 2010/0003211 A1<br>entire text<br>EP 2143766 A1<br>CN 101624502 A<br>KR 10-2010-0005675 A | |
| JP 2005-344052 A | 15 Dec. 2005 | (Family: none) | |
| WO 2014/103894 A1 | 03 Jul. 2014 | EP 2940089 A1<br>entire text | |
| WO 2020/096071 A1 | 14 May 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000026844 A
- JP 2020058774 A
- JP 2020213811 A